# EUROPEAN PATENT APPLICATION

(11) **EP 1 219 698 A1**
(43) Date of publication of application: **03.07.2002**
(21) Application number: 00964765.2
(22) Date of filing: 10.10.2000
(51) Int. Cl.: C11C 3/00, C11B 1/04, C11B 1/06, C11B 3/16, A23D 9/02, A23D 9/00, A23G 1/00, A23L 1/30

(54) **FAT ORIGINATING IN CUPUASSU SEED, PROCESS FOR PRODUCING THE SAME AND USE THEREOF**

(30) Priority: 07.10.1999 JP 28707799; 19.11.1999 JP 32894499; 16.12.1999 JP 35758499; 06.04.2000 JP 2000104297
(71) Applicant: Asahi Foods Co., Ltd., Kuze-gun, Kyoto 613-0035 (JP)
(72) Inventor: NAGASAWA, Makoto, Kobe-shi, Hyogo 651-1513 (JP); NUMATA, Hiroyuki, Sanda-shi, Hyogo 669-1324 (JP)
(74) Representative: Best, Michael, Dr.
(86) International application number: JP0007039
(87) International publication number: WO0125377

(57) **Abstract**

Cupuacu oil and fat which do not contain stimulants such as caffeine or theobromine, and so on, and are useful for maintaining health, chocolate-like health foods which can be made by using the Cupuacu oil and fat, and the methods for manufacturing the Cupuacu oil and fat, and the health foods containing the Cupuacu oil and fat are provided.

Health foods containing Cupuacu oil and fat derived from Cupuacu seeds.

## Description

### Technical Field

The present invention relates to the Cupuacu oil and fat products including those health foods such as chocolate-like cakes, and so on which contain an oil and fat made of Cupuacu *(Cupuacu - Theobroma grandfiflorum (Willderow ex Sprengel) Schumann).*

### Background Art

Cupuacu is the common name of the *Theobroma grandfiflorum (Willderow ex Sprengel) Schumann* and is a tropical plant of the genus *Theobroma,* the family *Sterculiaceae.* This family comprises about 50 genera and 750 species of trees (including both trees and shrubs), almost all of them being tropical ones. The genus *Theobroma* is divided into six sub-genera including Androretalum, Grossretalum, Oreanthes, Telmatocarpus and Theobroma and further classified into 22 species.

Cupuacu is a tree of sub-genus *Glossoretalum,* the species *Theobroma,* growing naturally or being cultivated, although on a very small scale, in the Amazon basin on the South American Continent. The flesh of the fruit is mainly eaten as a foodstuff by the original inhabitants there and, although on a small scale, processed into juices, nectars, jellies, sherbets, ice-creams and yogurts, and so on. This plant is one of the evergreen shrubs, grows well in the shade, and, therefore, is suitable for co-existing with other trees of different kinds. It blooms white or pale yellow flowers all the year round and then produces fruits of 1.2 to 1.3 kg in weight. The flesh of the fruit accounts for about 40% of the total weight of the fruit and contains 30 to 40 seeds on average, the seeds having been so far discarded as what are useless or utilized at best as the feed for the livestock.

### Disclosure of Invention

The present inventors considered that the Cupuacu tree, which has, as one of the shrubs of Amazon origin, a high adoptability to grow in a shade and a high ability to co-exist with other species of trees in tropical rain forests, is especially suited to plantation, for example with eucalyptus and palm-trees, and so on, in the so-called "Agro-forestry" which aims at the recovery of the green on the site left wasted after damaging the tropical rain forests for agriculture. Thus, the inventors considered that the plantation of the Cupuacu will be able to contribute much to the preservation and recovery of the tropical rain forests and to the promotion of the development of the local industries.

The flesh of the Cupuacu fruit has been, although on a small scale, used as food by the original inhabitants. And, the Cupuacu fruit is, as stated above, rather large and contains a lot of seeds in it, the total weight of the seeds amounting up to 17-18% of the weight of the fruit. These seeds have usually been discarded as waste material usually by burying them in the ground. Exploitation of some valuable use of the Cupuacu seeds will make the Cupuacu trees commercially more valuable, thereby promoting plantation of the Cupuacu trees and eventually contributing to prevention of devastation of the tropical rain forests.

In the light of these consideration, the present inventors have made an intensive investigation on the utilization of the Cupuacu seeds, useless at present, and found that the Cupuacu seeds contain a large amount of low melting and high-quality oil and fat and that, when the Cupuacu seeds are collected and processed successively in a series of steps, for example, of washing, fermentation (washing may be done just before the fermentation step also), drying, roasting, a special shell-removing procedure, crushing and pressing, and so on, both crude and purified Cupuacu oil and fat of this invention, which are useful as raw materials for manufacturing health foods, pharmaceuticals and cosmetics, can be produced industrially advantageously. It should be noted here that "Cupuacu" in the present invention may be either the naturally occurring conventional one or any variants of it, which may be obtainable by hybridizing Cupuacu with other plants or by applying gene-manipulation technique, so long as the same crude or purified Cupuacu oil and fat of the quality described below can be produced from them, and, that any oil and fat obtainable from such Cupuacu variants are the Cupuacu oil and fat of the present invention.

The present inventors have found that the Cupuacu oil and fat have melting points in a range of 29 to 32°C, near the body temperatures, and are of characteristic fatty acid composition, and that this property of the Cupuacu oil and fat can be utilized to make chocolate-like cakes with excellent aroma and taste by adding and mixing, if desired, to the purified Cupuacu oil and fat, such additives as sugar, powdered milk, vegetable oil and fat (for example, palm oil, coconuts oil, and rape oil, and so on), and so on. Furthermore, the present inventors have found that addition of appropriate amount of the Cupuacu oil and fat to some processed foods such as margarines and whipped creams may improve the quality of those processed foods. Moreover, because the crude Cupuacu oil and fat have the same usefulness as the purified Cupuacu oil and fat have, the crude Cupuacu oil and fat can be used in a variety of fields as oil and fat material alone or in combination with the purified Cupuacu oil and fat.

The present inventors also have studied intensively on the characteristics of the Cupuacu oil and fat and chocolate-like cakes made of them and found that, when the Cupuacu oil and fat are used for preparing chocolate-like cakes, addition of lecithin to the Cupuacu oil and fat reduces the viscosity of them, improving the manipulability of them and giving the chocolate-like cakes produced softness and pleasantness on the tongue. Moreover, the present inventors have found that, in cases where the low melting point of the Cupuacu oil and fat may make it difficult to manipulate the Cupuacu oil and fat or the chocolate-like cakes in some districts or at some higher ambient temperatures, mixing of cacao butter, a melting-point-adjuster, to the Cupuacu oil and fat can solve the problem.

The present inventors also have found that the Cupuacu oil and fat can be produced industrially by a manufacturing method comprising three steps: the first step of fermenting the Cupuacu seeds to get Cupuacu beans, the second step of roasting the Cupuacu seeds and threshing them to get the albumen, followed by crushing of the latter to give the crude Cupuacu oil and fat, and the third step, if desired, of pressing the crude Cupuacu oil and fat to get the purified Cupuacu oil and fat.

Furthermore, in a study on a more efficient industrial manufacturing method of the Cupuacu oil and fat, the present inventors have found that it is not so easy to get the albumen out of the Cupuacu seeds, compared with the case of the cacao beans, where albumen can be taken out with ease by roasting them, after fermentation, in a conventional hot-wind or an open-fire roaster to make the shell to be easily peeled.

Namely, different from the shell of the cacao beans, the shell of the Cupuacu seeds, after fermentation, is, although elastic, so thick and hard that it can not be removed easily even after roasting. Crushing of the Cupuacu seeds coarsely and mechanically with a crusher, and so on, and separation of albumen from the shell gives only a low yield of albumen, a lot of albumen having remained still stick on the shell. The albumen stick on the shell is not suitable for food, because the shell is astringent and not soft and pleasant on the tongue. Repeated crushing, followed by separation of the albumen was tried without success, because the yield was still as low as about 40% and the operation was too complex to carry out and took time, too. It was confirmed by the present inventors that the Cupuacu seeds, different from the cacao beans, have a lot of oil between the albumen and the shell and that the oil binds the albumen to the shell firmly enough to make it difficult for us to separate the albumen from the shell.

After an intensive investigation on this problem, the present inventors have found, rather unexpectedly, that the problem can be solved by simply bringing the Cupuacu seeds to contact with a hot water or a heated steam, making a cut on the shell and taking out the albumen through the cut or removing the shell by peeling it from the cut. The finding of this procedure has made it possible for us to produce the Cupuacu oil and fat industrially and more efficiently.

The present invention relates:
(1) A Cupuacu oil and fat composition comprising the Cupuacu oil and fat, and lecithin or/and cacao butter.
(2) A health food of naturally occurring plant origin comprising the Cupuacu oil and fat, and lecithin or/and cacao butter.
(3) A health food of item (2), wherein the food is a chocolate-like cake.
(4) A health food of item (3), wherein the food is a chocolate substitute.
(5) A health food of item (2) or (3), which includes, furthermore, one or more than one of the ingredients selected from the group consisting of sugar, powdered milk, palm oil, coconut oil and rape oil.
(6) A method for maintaining or promoting health characterized by not eating chocolate, but eating, instead, a health food mentioned in any of items (2) to (5).
(7) A method for manufacturing Cupuacu oil and fat which comprises the following steps: the first step of fermenting Cupuacu seeds to get Cupuacu beans, the second step of roasting Cupuacu beans, gathering the albumen by threshing the roasted beans, followed by crushing the albumen to get crude Cupuacu oil and fat, and if desired, the third step of pressing the crude Cupuacu oil and fat to get purified Cupuacu oil and fat.
(8) A method for manufacturing the Cupuacu oil and fat which comprises the following steps: the first step of fermenting Cupuacu seeds to get Cupuacu beans, the second step of treating Cupuacu beans with hot water or heated water vapor, followed by making a cut in the shell and taking out the albumen through the cut, roasting the albumen and crushing the latter to get crude Cupuacu oil and fat, and if desired, the third step of pressing the crude Cupuacu oil and fat to get purified Cupuacu oil and fat.
(9) A health food containing the crude or purified Cupuacu oil and fat obtainable by the method of the items (7) or (8) and lecithin or/and cacao butter.
(10) A health food of item (9) containing, in addition to the ingredients mentioned in item (9), one or more than one of the ingredients selected from the group consisting of sugar, powdered milk, palm oil, coconut oil and rape oil.
(11) A health food mentioned in the item (9) or (10), which is either a chocolate-like cake or a chocolate substitute.

### Best Mode for Carrying Out the Invention

A representative flow chart of processes for manufacturing the Cupuacu oil and fat is as follows:

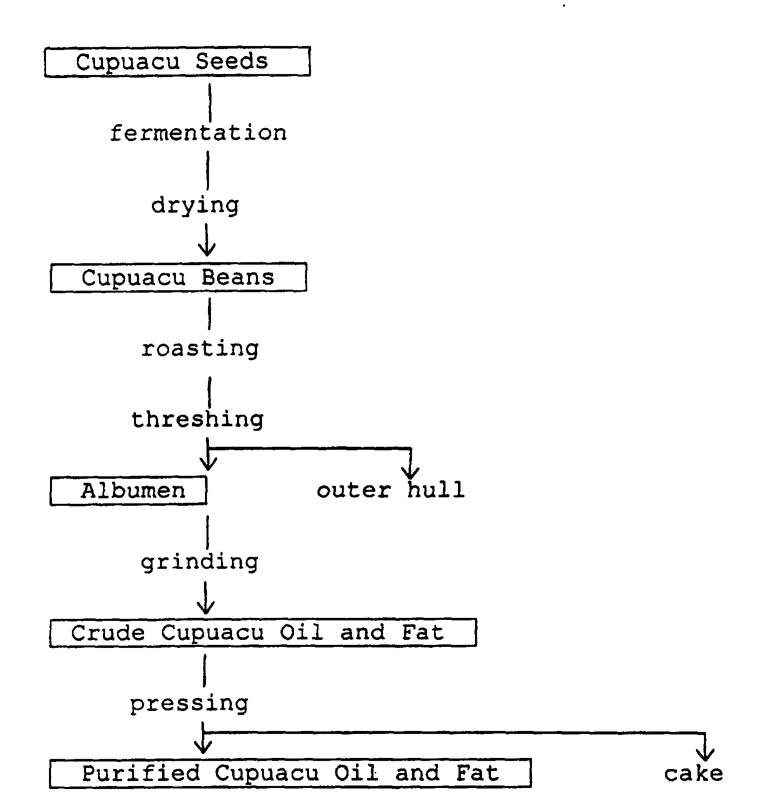

What follows is the detailed description of the preferable mode for carrying out the present invention, wherein "%" means "weight percent".

The fruits harvested from the Cupuacu trees are stone fruits which weigh about 1 kg or so, as stated above. The flesh of the fruit, which comprises about 40% of the whole weight, is tasteful, is rich in pectin and citrate, and fit both to eat raw and to use as the starting material for manufacturing various processed foods such as juices, ice-creams, jellies and yogurts, and so on, which indicates that installation of plants for manufacturing such processed foods will make it possible for us to collect the by-product, Cupuacu seeds, in a very easy and in a hygienic way.

The Cupuacu seeds thus collected and sorted can be made into crude and then, into purified Cupuacu oil and fat by subjecting them to a series of processes for the production of Cupuacu oil and fat, such as, for example, the one described below, which begins with a fermentation process.

The fermentation can be done either as a natural fermentation by the aid of microorganisms which remain attached on the seeds when the Cupuacu seeds are collected in some Cupuacu-producing districts (for example, a plantation in the city of Manaus, in the Amazon basin) , or by using microorganisms of the same species as those used in the fermentation of cacao beans. Namely, the Cupuacu seeds, in a preferable mode of processing, are rinsed, if desired, with water, put into an airtight wooden or plastic container of suitable size, and the container is sealed tight. to initiate fermentation through spontaneous growth of yeast cells existing on the seeds. During the 5- to 7-day period of the fermentation, the polysaccharides contained in a fibrous pulp surrounding the Cupuacu seeds are degraded into ethyl alcohol by alcoholic fermentation, and the ethyl alcohol produced are then further converted into acetic acid by acetic acid fermentation, thus the extra fibrous substances susceptible to rotting being removed.

After fermentation, the Cupuacu seeds are then preferably subjected to drying. After completion of the fermentation, the Cupuacu seeds are spread on an appropriate mat and subjected to drying in the sun or to a forced drying with heating to reduce the water content of the seeds from about 55% to less than about 6%. By this treatment, Cupuacu beans suitable to a long-term storage are obtained. Cupuacu beans which got through the fermentation process, are then subjected to the cleaning/purifying procedure to remove any contaminants such as refuse and dusts brought into during the drying, filled into bags of suitable size made of jute or hemp and stored and transported until they are subjected to the process for production of the Cupuacu oil and fat.

In the cleaning/purifying process, various contaminants in the fermented and dried seeds of Cupuacu, such as pebbles, metals, refuses and dusts, and also flat beans and double beans, and so on are removed by an appropriate combination of sieving apparatus, electromagnets, compressed air and small-sized dust separator, and so on. The Cupuacu seeds which completed the processes of fermentation, fermentation-drying or fermentation-drying-cleaning are called "Cupuacu beans". The process of cleaning/purifying may also be carried out in advance of the fermentation step.

Next, the Cupuacu beans are usually roasted in a hot-air or open-fire roaster in the roasting step.

As the roaster, a hot-air or an open-fire roaster which is known per se and used, for example, in the roasting of coffee beans can be employed. Although it is neither possible nor appropriate to determine the roasting conditions generally, roasting can usually be carried out by heating the Cupuacu beans at temperatures of from about 130 to 150°C for about 20 to 30 minutes. Roasting facilitates the separation of albumen from the fibrous outer shell (outer seed coat) in the subsequent threshing process.

Another advantage of the roasting, in addition to the effect of facilitating threshing, of the roasting, which may be carried out by roasting by means of hot air or an open fire, is to make the Cupuacu beans more excellent in their taste.

Threshing can be carried out by removing the shell from the roasted Cupuacu beans. In this process, the roasted Cupuacu beans are usually be crushed in a crusher and then sieved to remove fibrous shell, recovering the albumen separated. These crushing and sieving may be appropriately repeated until the content of the shell which still remains on the albumen decreases to less than about 5% by weight.

The albumen obtainable in this way is then ground to produce the crude Cupuacu oil and fat. Preferably, the albumen of the Cupuacu beans thus obtained is charged into a mill and ground usually in two steps to yield the crude Cupuacu oil and fat. Namely, in the first step of grinding, the albumen is ground to an average particle size of about 150 microns by the use of a blade mill, and in the second step, to an average particle size of about 75 microns by using a ball mill. This grinding gives either a paste-like mass or a liquid to an oily mass of the oil and fat contained in the albumen in about 54 to 59% which are molten by frictional heat generated by grinding.

The crude Cupuacu oil and fat thus obtained are pressed to give the purified Cupuacu oil and fat. Preferably, the crude Cupuacu oil and fat is pressed by, for example, a hydraulic press to give a purified Cupuacu oil and fat. In this process, the purified Cupuacu oil and fat is filtered under pressure. When filtered under pressure, the purified Cupuacu oil and fat is obtained as a liquid, and it remains liquid under ordinary pressure at a temperature higher than about 40°C, but solidifies when cooled. Thus, the purified Cupuacu oil and fat may be separated and obtained either in a liquid or in a solid form.

In the manufacturing method described above (hereinafter abbreviated as Method A), the Cupuacu beans obtained through fermentation and drying, may also be boiled before roasting to soften the shell and to facilitate the removal of the shell, followed by taking out of the albumen and roasting of it. Namely, the crude and purified Cupuacu oil and fat may be produced according to the flow chart of the steps (hereinafter may be abbreviated as Method B). Surprisingly, it was found that with this Method (namely Method B), the yield of the Cupuacu oil and fat is improved by about 30%, compared to the case where the steps shown previously on the first flow chart are followed.

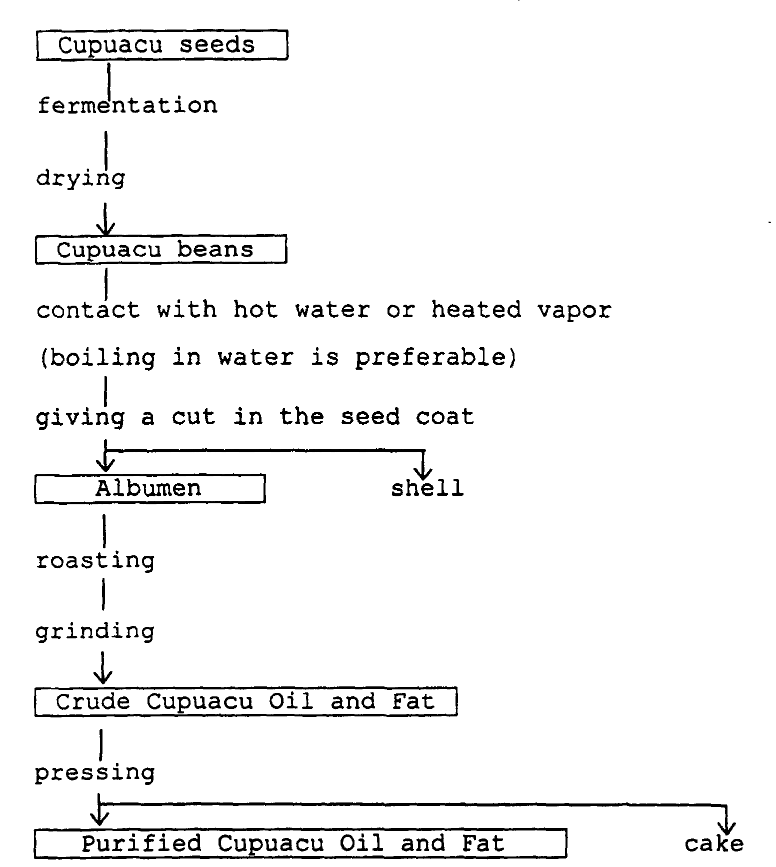

Each process of fermentation, drying, roasting, grinding and pressing in Method B can be carried out in the same manner as each of them in Method A.

The contact of the Cupuacu beans with either hot water or heated water vapor is preferably carried out by boiling them in water.

The preferable mode of carrying out this process is as follows:

Boiling in water may be carried out according to methods known per se, namely, both under ordinary or under elevated pressure. Usually, the Cupuacu beans obtained after fermentation and drying may preferably be boiled in boiling water under ordinary pressure for about 5 to 30 minutes, or more preferably for about 10 to 20 minutes, followed by draining of the water by pouring boiled beans on, for example, a basket.

The boiling process may be replaced by treatment with heated water vapor. The treatment itself can be carried out by the method known per se, both under ordinary pressure and under elevated pressure. Temperature which may be used is usually over 100°C, or more preferably from about 100°C to 120°C.

For making cuts in the seed coat, the seeds are cut while they are soft by using, usually, mechanical devices such as cutters or knives, and then, the albumen is taken out through the cut by human power or by the aid of any instruments suitable therefore. The albumen thus taken out is then, preferably, dried by using, for example, a drier, to the water content of less than 6%, followed by roasting it until the water content is reduced to less than 2% as described above. The dried albumen thus obtained is then ground by using, for example, a grinder to give the crude Cupuacu oil and fat, which is then pressed to produce the purified Cupuacu oil and fat.

The crude Cupuacu oil and fat gives, when it is subjected to pressing, the purified Cupuacu oil and fat and a cake which contains fibers. A powder obtainable by grinding the latter cake can be taken as a fragrant drink in a manner similar to cocoa.

After addition of a surface active agent such as, for example, lecithin, and so on and some flavors, if desired, to the Cupuacu oil and fat, and thorough mixing, the resultant mixture is finely pulverized by passing it through a mixing roll and kneaded well with a kneader at about 40 to 45°C to yield a kneaded mass. Addition of lecithin lowers the viscosity of the Cupuacu oil and fat, and gives them an improved workability and gives a soft and pleasant taste on the tongue to the chocolate-like cakes obtained.

The Cupuacu oil and fat have melting point lower than that of cacao butter. So, in cases where chocolate-like cakes are to be produced by using the purified Cupuacu oil and fat or a mixture of the crude and purified Cupuare oil and fat and it is desired to raise the softening temperature of the resultant chocolate-like cakes, it is good to replace a part of the Cupuacu oil and fat with cacao butter. The preferable ratio of mixing of the Cupuacu oil and fat relative to cacao butter in those cases is from about 97:3 to 60: 40 by weight.

Furthermore, vegetable oils may be admixed to the kneaded mass mentioned above, in addition to the powdered milk, sugar, and surface active agents. As such vegetable oils, there may be mentioned palm oil, coconut oil and rape oil, and so on, and more than one of these additives may be admixed.

As the preferable examples of the kneaded mass containing these additives, there may be mentioned those mixtures which comprise 5 to 90 parts, or more preferably 10 to 80 parts of the crude Cupuacu oil and fat, 10 to 50 parts, or more preferably 20 to 40 parts of the purified Cupuacu oil and fat, 15 to 60 parts, or more preferably 20 to 50 parts of sugar, and 0.01 to 1 part, or more preferably 0.2 to 0.6 parts of lecithin by weight per 100 parts by weight of the kneaded mass.

Moreover, it is also preferable to replace some parts of cacao butter with the Cupuacu oil and fat, when chocolate is made from cacao butter.

It is also preferable by casting in molds the kneaded mass mentioned above or the masses obtainable by mixing puffs or nuts into the kneaded mass to produce Cupuacu-chocolate cakes. Furthermore, shell-type Cupuacu oil and fat-chocolates can be prepared by putting creams, nuts, biscuits, and liqueurs, and so on, into shells made of Cupuacu oil and fat-chocolate, followed by sealing off the shells.

Furthermore, another type of Cupuacu oil and fat-chocolates can be made by pouring, under temperature control, the kneaded mass described above like a fall on some solids such as biscuits, nuts and creams placed on a meshwork-conveyer, followed by blowing off of the excess mass and cooling.

Hereinafter, the present invention will be explained in further detail by referring to examples.

### Examples

### Example 1

### Manufacture of the Purified Cupuacu Oil and Fat

Cupuacu seeds harvested from Cupuacu trees cultivated on a plantation located in the suburb of Manaus, a city in the Amazon basin, were subjected, without removing the pulp on them, to fermentation with yeast, and so on which had already attached on the Cupuacu seeds, in a fermentor for 5 to 7 days, during which time the pH decreased to 5.0 to 5.3 and the temperature rose to 42-45°C. Then, the fermented seeds were transferred on to a tray and dried in the sun for 7 days to give Cupuacu seeds of 20 to 30 mm in length along the major axis, and 16 to 20 mm in length along the minor axis, weighing 2.1 to 2.5 g/seed (the weight varies within this range) on average, and having a water content of about 6 to 7%.

The Cupuacu seeds, after being fermented and dried, were cleaned by removing metal contaminants and refuses and dusts with electromagnets and compressed air, respectively, and roasted in a continuous roasting apparatus with hot air at a temperature of 130 to 150°C for about 20 to 30 minutes, to yield Cupuacu seeds of water content as low as about 2%, which are rich in aroma. The roasted Cupuacu seeds were then sieved to remove refuses, dust and cracked seeds, charged into a crusher to peel off the shells, and screened through a 80-mesh strainer to give the Cupuacu albumen. The recovered screenings were returned to the first sieving step and crushed again.

The resultant Cupuacu albumens were pulverized either in two steps, first crushed with a blade mill and secondly with a ball mill, or in one step, namely, by the aid of a micropulverizer, to particles of less than 75 micrometer in diameter on average, to give the crude Cupuacu oil and fat as a liquid mass. This crude Cupuacu oil and fat was then pressed by a hydraulic filter press to give the purified Cupuacu oil and fat.

Thus, following the procedure described above, from 100 kg of raw Cupuacu seeds (average water content: 68%), was obtained about 45 kg of dry Cupuacu seeds (average water content: 6%), which was then roasted to give about 43 kg of roasted Cupuacu seeds, which gave, after crushing, about 18 kg of Cupuacu albumen, from which by subsequent micropulverization and pressing with a filter press, 7.7 kg of purified Cupuacu oil and fat was obtained.

### Example 2

### Manufacture of Chocolate-like Cakes: Cupuacu Chocolates

By using the crude Cupuacu oil and fat and the purified Cupuacu oil and fat, both obtained in Example 1, three kinds of cakes were produced:

| (1) Bitter type | |
|---|---|
| Crude Cupuacu oil and fat | 45 parts by weight |
| Purified Cupuacu oil and fat | 12 parts by weight |
| Powered milk | none |
| Sugar | 43 parts by weight |

| (2) Milk type | |
|---|---|
| Crude Cupuacu oil and fat | 30 parts by weight |
| Purified Cupuacu oil and fat | 16 parts by weight |
| Powered milk | 10 parts by weight |
| Sugar | 44 parts by weight |

| (3) White type | |
|---|---|
| Crude Cupuacu oil and fat | 0 parts by weight |
| Purified Cupuacu oil and fat | 41 parts by weight |
| Powered milk | 18 parts by weight |
| Sugar | 41 parts by weight |

The indicated amounts of each ingredients were weighed and charged into a mixer, mixed, finely pulverized and kneaded at the temperature of 40 to 45°C, for different length of time of 10 to 20 minutes depending on each formulation, followed by temperature adjustment, casting into a mold, and cooling to a temperature of 10 to 15°C, to give the respective chocolate-like cakes (Cupuacu chocolates) products. These products were found to be excellent and compared well with the conventional chocolate cakes in terms of qualities of product such as flavor and taste.

### Example 3

In a manner described below, Cupuacu beans were processed by boiling procedure to give the crude Cupuacu oil and fat.

The fermented and dried Cupuacu beans obtained in a manner same with those in Example 1 were boiled in boiling water for about 10 to 20 minutes. The water was drained off the beans, a cut was made in the seed coat of the beans while they were soft, and then, the albumens were taken out. The albumens obtained were dried by using a dryer to the water content of less than 6% by weight, and then roasted further until the water content was reduced to less than about 2% by weight by using a hot-air roaster, followed by grinding by using a grinder, to give the crude Cupuacu oil and fat.

### Example 4

In a manner just the same as in Example 2, except for following the formulations described below instead of them in Example 2, each type of chocolate-like cake (Cupuacu chocolate) was produced. The products were of excellent quality and compared well with the conventional chocolate cakes in terms of qualities such as flavor and taste.

| | Bitter type (weight %) | Milk type (weight %) | White type (weight %) |
|---|---|---|---|
| Crude Cupuacu | 40 | 10 | - |
| Purified Cupuacu | 12.5 | 24.5 | 31.5 |
| Powdered milk | - | 20 | 23 |
| Sugar | 47 | 45 | 45 |
| Lecithin | 0.5 | 0.5 | 0.5 |

### Example 5

In a manner just the same as in Example 2, except for following the formulations described below instead of them in Example 2 each type of chocolate-like cake (Cupuacu chocolate) was produced. The products were of excellent quality and compared well with the conventional chocolate cakes in terms of qualities such as flavor and taste.

| | Bitter type (weight %) | Milk type (weight %) | White type (weight %) |
|---|---|---|---|
| Crude Cupuacu | 40 | 10 | - |
| Purified Cupuacu | - | - | 11.5 |
| Powdered milk | - | 20 | 23 |
| Sugar | 47 | 45 | 45 |
| Cacao Butter | 12.5 | 24.5 | 20 |
| Lecithin | 0.5 | 0.5 | 0.5 |

### Industrial Applicability

The present invention provides Cupuacu oil and fat and health food prepared from them, both of which are useful for maintaining health.

## Claims

1. A Cupuacu oil and fat composition comprising the Cupuacu oil and fat, and lecithin or/and cacao butter.

2. A health food of naturally occurring plant origin, comprising Cupuacu oil and fat, and lecithin or/and Cacao butter.

3. A health food as claimed in claim 2, wherein the food is a chocolate-like cake.

4. A health food as claimed in claim 3, wherein the food is a chocolate substitute.

5. A health food as claimed in claim 2 or 3, which includes, furthermore, one or more than one of the ingredients selected from the group consisting of sugar, powdered milk, palm oil, coconut oil and rape oil.

6. A method for maintaining or promoting health **characterized by** not eating chocolate, but eating, instead, a health food as claimed in any of claims 2 to 5.

7. A method for manufacturing Cupuacu oil and fat which comprises the following steps: the first step of fermenting Cupuacu seeds to get Cupuacu beans, the second step of roasting Cupuacu seeds, gathering the albumen by threshing the roasted seeds and then crushing the albumen to get crude Cupuacu oil and fat, and if desired, the third step of pressing the crude Cupuacu oil and fat to get purified Cupuacu oil and fat.

8. A method for manufacturing Cupuacu oil and fat which comprises the following steps: the first step of fermenting Cupuacu seeds to get Cupuacu beans, the second step of treating Cupuacu beans with hot water or heated water vapor, followed by making a cut in the shell and taking out the albumen through the cut, roasting the albumen and crushing the latter to get crude Cupuacu oil and fat, and if desired, the third step of pressing the crude Cupuacu oil and fat to get purified Cupuacu oil and fat.

9. A health food containing the crude or purified Cupuacu oil and fat obtainable by the method as claimed in claim 7 or 8, and lecithin or/and cacao butter.

10. A health food as claimed in claim 9 containing, in addition to the ingredients mentioned in claim 9, one or more than one of the ingredients selected from the group consisting of sugar, powdered milk, palm oil, coconut oil and rape oil.

11. A health food as claimed in claims 9 or 10, which is either a chocolate-like cake or a chocolate substitute.
